(19) Europäisches Patentamt
European Patent Office
Office européen des brevets

(11) **EP 1 439 680 A1**

(12) **EUROPEAN PATENT APPLICATION**

(43) Date of publication:
**21.07.2004 Bulletin 2004/30**

(51) Int Cl.⁷: **H04L 27/38**

(21) Application number: **03290126.6**

(22) Date of filing: **20.01.2003**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(71) Applicant: **Motorola Inc.**
**Schaumburg, IL 60196 (US)**

(72) Inventors:
- **Muck, Marcus**
**75013 Paris (FR)**
- **Miet, Xavier**
**92130 Issy Les Moulineaux (FR)**
- **Buzenac-Settineri, Véronique**
**91300 Massy (FR)**
- **Mazet, Laurent**
**75010 Paris (FR)**

(74) Representative: **Wharmby, Martin Angus**
**Motorola Centre de Recherche,**
**Parc Technologique de St. Aubin,**
**Route de L'Orme au Merisier,**
**Immeuble Columbia**
**91190 Gif-sur-Yvette (FR)**

(54) **Digital receiver demapper**

(57) A digital communication unit (200) comprises a digital receiver (210) receiving a digital signal. The digital receiver comprises a digital demodulator for converting the received digital signal into digitized demodulated data, and a de-mapping function (400), operably coupled to the digital demodulator for receiving and de-mapping demodulated data to provide channel decoding data to an iterative or soft input decoder. A normalization function (412), operably coupled to or functioning as part of the de-mapping function (400), normalizes the received demodulated data such that a de-map operation of the normalized demodulated data generates a soft input bit sequence (414). A combining function (424) receives extrinsic data (426) and combines the received extrinsic data (426, 428) with a soft input bit sequence (414) to generate a de-mapped signal (434). A method of receiving a communication signal is also provided.

This architecture enables a realisable hardware implementation of a de-mapper function. The de-mapper architecture also offers very low complexity and easy reconfigurability, enabling a receiver designer/receiving communication unit to adapt a receiver operation to different mappings and/or constellation types.

FIG. 4

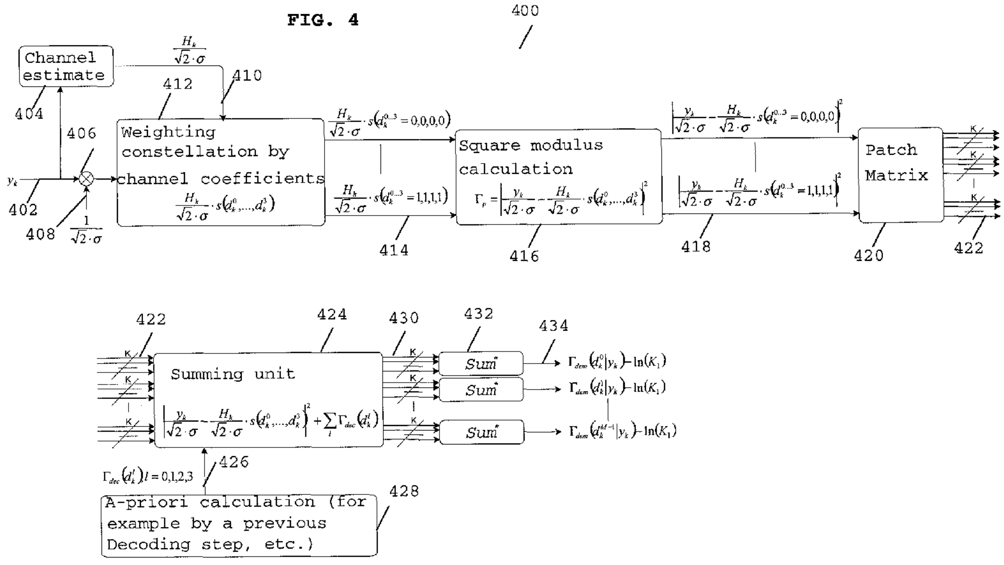




EP 1 439 680 A1

## Description

### Field of the Invention

This invention relates to a digital communication receiver architecture. The invention is applicable to, but not limited to, a block de-mapper architecture in a wireless receiver.

### Background of the Invention

Wireless communication systems, for example digital cellular telephony or digital private mobile radio communication systems, typically provide for radio telecommunication links to be arranged between a plurality of base transceiver stations (BTSs) and a plurality of subscriber units, often termed mobile stations (MSs). Wireless communication systems are distinguished over fixed communication systems, such as the public switched telephone network (PSTN), principally in that mobile stations move between BTS and/or different service providers. In doing so wireless communication units encounter varying radio propagation environments. Thus, wireless digital communication technology has been developed to cope with the peculiarities of, for example, Rayleigh fading, varying signal strength, varying propagation conditions, etc.

Furthermore, a number of present-day communication receivers are designed to provide an estimate of the effect induced by the radio communication channel on the data being transmitted. Channel estimation is required so that the received data can be equalised to reduce, restore or minimise signal degradation caused by transmission channel impairments. Thus, a number of digital coding/ decoding and digital modulation/demodulation techniques have been developed to optimise the use of, what is effectively, a finite amount of radio frequency spectrum.

In the transmitter of a digital communication unit, information bits are, in general, mapped onto complex symbol constellations, such as Binary Phase Shift Keying (BPSK), Quadrature Phase Shift Keying (QPSK), 16-point Quadrature Amplitude Modulation (16-QAM), 64-point Quadrature Amplitude Modulation (64-QAM), etc.

The corresponding inverse operation in the receiver is called *'De-Mapping'* and comprises computing a metric, for each information bit, to input to the decoder. Many different types of de-mapping architecture are known. The respective architecture design depends primarily on the type of mapping used in the transmitter, and thereafter on the encoder/decoder structure.

A number of present-day encoders/decoders employ iterative algorithms, for example, convolutional encoders are described in: P. Magniez, B. Muquet, P. Duhamel, V. Buzenac, and M. de Courville, 'Optimal Decoding of Bit-Interleaved Modulations: Theoretical Aspects and Practical Algorithms', in Proc. Int. Symp. on Turbo Codes and Related topics, Brest, France, Sept. 2000, pp. 169-172. A second example is: "Trellis coded modulation with bit interleaving and iterative decoding", IEEE Journal on Selected Areas in Communications, vol.17, no. 4, pp. 715-724, App. 1999, by X. Li and J. A. Ritchey. These papers describe techniques to increase the performance of a standard system whilst still using a classical encoder architecture. In this structure, the decoder is either a BCJR, as described in L. R. Bah1, J. Cocke, F. Jelinek, J. Raviv: Optimal Decoding of Linear Codes for Minimizing Symbol Error Rate, IEEE Transactions on Information Theory, March 1974 or a SOVA, as described in J. Hagenauer and P. Hoeher, A Viterbi algorithm with soft-decision outputs and its applications, GLOBECOM, 1989, vol. 3, pp. 1680-1686.

The metrics computed by the de-mapper are probability measures, which indicate how probable it is that a received bit is either a logical '1' or a logical '0'. The metrics are computed iteratively by taking into account the decoder outputs as a-priori information.

It is known that receiver circuits can take a multitude of forms, i.e. they are able to comprise a hardware-based architecture or the receiver functionality can be performed predominantly in software code. Alternatively, the receiver functionality may comprise a mixture of both hardware and software, often termed 'firmware'. Irrespective of the architecture selected by the receiver designer, the software and/or hardware resources are precious commodities. The primary implementation goal of the receiver designer is to provide a mechanism with adequate performance at little cost.

In this regard, the main advantage of a software implementation is its ability to be re-configured (reprogrammed) as well as the ease and the speed of bringing the software code into operation. The primary drawback of a software implementation resides in its sequential execution as well as its limitation to fixed hardware resources.

Conversely, a hardware-based implementation is optimised and responds accurately to a specific application - the notion of customisation. Hardware resources can be parallelized or pipelined, in order to speed up execution by factors while sometime adding little cost. The primary drawback of a hardware-based implementation lies in its specificity and difficulty to bring it into operation. In other words, it is easier to develop software on a processor than to design a specific integrated circuit. However, a dedicated integrated circuit will typically consume less power and require a smaller 'footprint' than a general-purpose processor. Such issues are important for handheld or embedded systems.

Referring now to FIG. 1, an overview of a classical digital communication system architecture 100 is shown.

The digital communication system architecture 100 includes a transmitter 110. The transmitter 110 receives a data stream 112 di and performs forward error correction (FEC) encoding 115 of the data stream to produce an output bi 117. The coded output bi 117 is input to a mapping function 120, which associates a subset of bits $x_k$ 122 to a location on a constellation. The constellation generated by the transmitter 110 is fed to the modulation scheme employed by the modulator 125. The modulator then outputs the modulated signal over the communication channel 130.

A receiver 150 receives the modulated signal over the communication channel 130. In effect, the receiver 150 performs the inverse operations of the transmitter 110. In this regard, the receiver 150 includes a demodulator 155 to translate the received samples into a number of symbols. The symbols are then input to a de-mapping function 160. In the de-mapping function 160, bit metrics are computed and input to a decoder 165. This computation involves the frequency channel coefficients, which must thus be estimated periodically.

A significant amount of research effort has been targeted recently towards soft-in/soft-out decoder architectures. Such research has been focused on both the theoretical background (see 'Optimal Decoding of Bit-Interleaved Modulations: Theoretical Aspects and Practical Algorithms' referenced above) and practical VLSI implementation issues (see E. Boutillon, Warren J. Gross, Glenn Gulak, "VLSI Architectures for the MAP Algorithm", to be published as a transaction paper to the IEEE Transaction on Communications, Sept. 02).

However, there are a number of significant drawbacks in the aforementioned methodologies. In particular, there has been minimal, if indeed any, focus on improving the performance of the de-Mapping module. The lack of any optimisation of the de-Mapping module's performance invariably leads to sub-optimal power consumption. This is a particular concern for surface-hungry very large-scale integrated circuit (VLSI) implementations. In the context of portable communication products, where both software and hardware resources are precious, it is generally considered as a critical need to develop a low complexity receiver architecture.

Thus, there exists a need in the field of the present invention to provide a communication unit having an optimised and efficient de-mapping module, together with an improved method of receiving a communication signal, wherein at least some of the aforementioned disadvantages may be alleviated.

## Statement of Invention

In accordance with the present invention, a digital communication unit and a method of receiving a communication signal is provided, as described in the appended Claims.

In summary, the preferred embodiment of the present invention proposes a digital communication unit with an improved de-mapping function, preferably in a hardware implementation structure, which is capable of taking into account a-priori probabilities of bits to be decoded.

The proposed structure provides both a fast computation structure facilitating a de-map operation of one symbol per clock cycle as well as being implementable with a small footprint and low-power consumption. Moreover, whilst being dedicated to de-mapping for iterative decoding, the present invention also proposes a novel implementation of a logarithm of sums calculation that can be reused for all kinds of turbo-decoders.

The preferred embodiment of the present invention introduces distinct functions of a-priori normalization, Euclidean distance calculation and a Patch Matrix that are also applicable to a software-based methodology.

## Brief Description of the Drawings

FIG. 1 illustrates a basic known wireless communication system architecture.

Exemplary embodiments of the present invention will now be described, with reference to the accompanying drawings, in which:

FIG. 2 illustrates a wireless digital communication unit adapted in accordance with a preferred embodiment of the present invention;

FIG. 3 illustrates a 16-QAM constellation diagram, indicating gray mapping, as known in the art;

FIG. 4 illustrates a block de-mapping architecture in accordance with a preferred embodiment of the present invention;

FIG. 5 illustrates a known topology for implementing a Max-star based logarithm of the sum of exponentials;

FIG. 6 illustrates a topology for implementing a logarithm of the sum of exponentials in accordance with a preferred enhanced embodiment of the present invention;

FIG. 7 presents a possible approximation of a correction term;

FIG. 8 shows a well-known tree-based structure for implementing a logarithm of the sum of exponentials that can be used in a preferred embodiment of the present invention; and

FIG. 9 illustrates simulation results of the logarithm of the sum of exponentials according to the preferred embodiment of the present invention when applied in different contexts.

**Description of Preferred Embodiments**

In accordance with the preferred embodiment of the present invention, an improved communication unit is provided whereby an improved de-mapping function is easily and readily implemented, particularly in a hardware configuration. The receiver in the preferred embodiment of the present invention may be implemented with any number of iterative decoder structures, for example a Soft Output Viterbi Decoder (SOVA), a Forward-Backward decoder, etc.

Referring now to FIG. 2, there is shown a block diagram of a wireless digital communication unit, for example a mobile station (MS) 200, which is adapted to support the inventive concepts of the preferred embodiments of the present invention.

As known in the art, the MS 200 comprises, for example, standard radio frequency components and circuits, such as an antenna 202 preferably coupled to an antenna switch 204 that provides isolation between a receiver and a transmitter chain within the MS 200. As known in the art, the receiver chain typically includes receiver front-end circuitry 206 (effectively providing reception, filtering and intermediate or base-band frequency conversion). The front-end circuit 206 is serially coupled to a signal processing function 208. An output from the signal processing function is provided to a suitable output device 210, such as a speaker.

The signal processing function 208 performs all signal processing functions for the MS 200, including, for example, demodulation, de-mapping, bit de-interleaving channel estimation and decoding, as known in the art.

In accordance with the preferred embodiments of the present invention, the operation of the signal processing function 208 has been adapted to support the inventive concepts herein described. In particular, the signal processing function 208 has been adapted to perform, or replaced in hardware by, a de-mapping function as described below with reference to FIG. 4. The signal processing function 208 is further adapted to include a calculation of any logarithm of a sum of exponentials by applying a hyperbolic-cosine function, as described further with respect to FIG. 6.

For completeness, the receiver chain also includes received signal strength indicator (RSSI) circuitry 212 coupled to the receiver front-end circuitry 206 and the signal processing function 208 (generally realised by a digital signal processor (DSP)). The controller 214 is also coupled to the receiver front-end circuitry 206 and the signal processing function 208 (generally realised by a digital signal processor (DSP)). The controller 214 may therefore receive bit error rate (BER) or frame error rate (FER) data from recovered information. The controller 214 is coupled to the memory device 216 for storing operating regimes, such as decoding/encoding functions and the like. A timer 218 is typically coupled to the controller 214 to control the timing of operations (transmission or reception of time-dependent signals) within the MS 200. In the context of the present invention, the timer 218 dictates the timing of speech signals, in the transmit (encoding) path and/or the receive (decoding) path.

As regards the transmit chain, as also known in the art, this essentially includes an input device, such as a microphone transducer coupled in series via transmit signal processor 228 to a transmitter/ modulation circuit 222. Thereafter, any transmit signal is passed through a power amplifier 224 to be radiated from the antenna 202. The transmitter/ modulation circuitry 222 and the power amplifier 224 are operationally responsive to the controller, with an output from the power amplifier coupled to the duplex filter or circulator 204. The transmitter/ modulation circuitry 222 and receiver front-end circuitry 206 comprise frequency up-conversion and frequency down-conversion functions (not shown).

Of course, the various components within the MS 200 can be arranged in any suitable functional topology that is able to utilise the inventive concepts of the present invention. Furthermore, the various components within the MS 200 can be realised in discrete or integrated component form, with an ultimate structure therefore being merely an arbitrary selection. The de-mapping function is preferably implemented in hardware, but may in some circumstances be implemented in software or firmware.

The transmitter signal processor 228, which is shown as being distinct from the receiver signal processor 208 for clarity purposes only, preferably includes a convolutional encoder or a turbo-coding function.

In the preferred embodiment of the present invention, we consider a received communication symbol $y_k$:

$$y_k = H_k \cdot x_k + \upsilon_k \qquad [1]$$

Where:

$H_k$ is the channel coefficient,
$x_k$ is the originally transmitted symbol, and
$\upsilon_k$ is the channel noise.

In general, we assume that $M$ coded information bits $d_k^0,...,d_k^{M-1}$ are modulated onto the $k^{th}$ symbol based on a corresponding constellation type, e.g. for $M$=4 bits a QAM-16 constellation 300 can be used, as illustrated in FIG. 3.

The corresponding amplitudes of the real and imaginary parts are preferably normalized by the factor $K$, usually to ensure that the mean symbol energy is '1'. The relationship between the bit vector ($d_k^0, d_k^1, d_k^2, d_k^3$) and the corresponding symbol amplitudes is termed the *'mapping'.* The preferred mapping algorithm shown in FIG. 3 is the so-called Gray-Mapping, where the neighbouring constellation points differ in one bit value only. Although the preferred embodiment of the present invention is described with reference to a 'Gray-mapping' implementation, it is within the contemplation of the invention that the inventive concepts described herein are equally applicable to any mapping type. In particular, the inventive concepts described herein benefit a receiver designer in the provision of an architecture that enables different mapping types to be readily and easily implemented.

In the following, for sake of easier understanding and simplicity, all calculations are presented for the case of a 16-QAM modulation scheme. It is noteworthy that the calculations are equally applicable to, and can be straightforwardly adapted to, all constellation types.

As Muquet presents it, the de-Mapping block calculates the following expressions for each symbol:

$$P(d_k^0|y_k) \approx \sum_{d_k^1,d_k^2,d_k^3 \in (0,1)} \frac{P(y_k|S(d_k^0,...,d_k^3)) \cdot P(d_k^0) \cdot P(d_k^1) \cdot P(d_k^2) \cdot P(d_k^3)}{P(y_k)}, \qquad [2]$$

$$P(d_k^1|y_k) \approx \sum_{d_k^0,d_k^2,d_k^3 \in (0,1)} \frac{P(y_k|S(d_k^0,...,d_k^3)) \cdot P(d_k^0) \cdot P(d_k^1) \cdot P(d_k^2) \cdot P(d_k^3)}{P(y_k)}$$

$$P(d_k^2|y_k) \approx \sum_{d_k^0,d_k^1,d_k^3 \in (0,1)} \frac{P(y_k|S(d_k^0,...,d_k^3)) \cdot P(d_k^0) \cdot P(d_k^1) \cdot P(d_k^2) \cdot P(d_k^3)}{P(y_k)}$$

$$P(d_k^3|y_k) \approx \sum_{d_k^0,d_k^1,d_k^2 \in (0,1)} \frac{P(y_k|S(d_k^0,...,d_k^3)) \cdot P(d_k^0) \cdot P(d_k^1) \cdot P(d_k^2) \cdot P(d_k^3)}{P(y_k)}$$

Where:

$d_k^l, k = 0,...,N-1; l; = 0,1,2,3$ is the $1^{th}$ bit modulated onto the $k^{th}$ transmitted symbol

$$x_k \ . \ P(d_k^l)$$

are a-priori probabilities, which indicate the probability that bit $d_k^l$,$k$=0,...,$N$-1;$l$=0,1,2,3 is a logical '0' or a logical '1', and

$$S(d_k^0,...,d_k^3)$$

is the corresponding complex constellation amplitude, as illustrated in FIG. 4.

In the following calculation only the expressions for the first bit $d_k^0$ will be considered. The remaining expressions are calculated straightforwardly.

Referring now to FIG. 4, a novel architecture for the logarithmic version of the iterative demapping 400 is

described. The de-mapping architecture 400 is based on the equation:

$$\Gamma_{dem}\left(d_k^0 \middle| y_k\right) = \ln(K_1) + \underset{d_k^1, d_k^2, d_k^3 \in (0,1)}{Sum^*}\left(\Gamma_p\left(y \middle| s\left(d_k^0, \ldots, d_k^3\right)\right) + \Gamma_{dec}\left(d_k^1\right) + \Gamma_{dec}\left(d_k^2\right) + \Gamma_{dec}\left(d_k^3\right)\right) \quad [3]$$

The full derivation of which is given below.

A receiver input signal $y_k$ 402 is fed to a Channel Estimation function 404 to estimate the channel impulse response. It is envisaged that any known channel estimation function may be used, for example, channel estimation based on a learning sequence, channel estimation based on a (semi-) blind algorithm exploiting the statistical properties, etc. The input signal $y_k$ 402 is also fed to a multiplier function 406, to provide a-priori normalisation of the input signal. In this regard, the input signal is divided by a value related to the noise variance, i.e.

$$\frac{1}{\sqrt{2} \cdot \sigma},$$

408.

The output 410 from the channel estimation function 404 together with the multiplied input signal are input to a function 412 that effectively applies a weighting to the channel constellation. In this regard, the incoming signal $y_k$ has been weighted by

$$\frac{1}{\sqrt{2} \cdot \sigma},$$

and the outputs of the channel estimation block also weighted by

$$\frac{1}{\sqrt{2} \cdot \sigma}.$$

In the preferred embodiment of the present invention, the weighting of the constellation is performed using a hard-wired module on an application specific integrated circuit (ASIC). Notably the ASIC will not require a complex multiplier to implement the weighting function. By performing hard-wired multiplications, between the variables $H_k$ and the constant values

$$s\left(d_k^0, \ldots, d_k^3\right),$$

a saving of up to 75% in terms of hardware resources has been achieved.

A skilled artisan will appreciate that in a hardware implementation (especially an ASIC design), multipliers are very complex and thus consume significant footprint space and power. Furthermore, complex multipliers are significantly more complex than real multipliers. Thus, it is desirable to limit the number of multipliers to a strict minimum. In addition, it is known that divider functions are even problematic, i.e. they are not only extremely complex (and should be avoided whenever possible), but also introduce a large processing delay (latency) since iterative algorithms usually implement them.

In particular, the structure of the constellation weighting function 412 is based on the fact that the unnormalised constellation amplitude values are integer values. For example, the 16-QAM constellation of FIG. 3 has amplitude values of:

$$s\left(d_k^0,\ldots,d_k^3\right) = \pm(1,3) \pm j.(1,3) \qquad [4]$$

Typically, in the de-mapping literature a "square modulus calculation" block operation of the form

$$\Gamma_p = \frac{\left|y_k - H_k \cdot s\left(d_k^0,\ldots,d_k^3\right)\right|^2}{2 \cdot \sigma^2}$$

is then performed. However, as explained above, the division operation here is extremely complex, costly and power consuming in an ASIC implementation.

Thus, and advantageously, the present invention proposes a much more efficient mechanism for handling the received communication signal. In particular, in the case of 16-QAM constellations, for example, the known de-mapping method requires sixteen 'division' calculations in the "square modulus calculation block" per incoming sample. As illustrated below, the present invention provides a mechanism whereby only one multiplication computation of the incoming sample $y_k$ is required (

$$\frac{1}{\sqrt{2} \cdot \sigma}$$

is pre-calculated).

A new square calculation function 416 is employed, whereby normalisation of the Euclidean distance is performed prior to the square calculation function 416, and applied directly on the input signal. This enables one division calculation per input signal to be performed square calculation function 416, rather than the known technique where one division calculation per calculated Euclidean distance is required.

In summary, an architecture that removes the normalisation function from the 'Square Modulus Calculation' block greatly reduces the calculation complexity. Since it is assumed that the channel impulse response estimates are refined relatively infrequently, the complexity of normalising the channel coefficients as

$$\frac{H_k}{\sqrt{2} \cdot \sigma}$$

is practically insignificant. Moreover, it is assumed that the variance of the channel noise $\sigma^2$ is also only re-estimated infrequently. Thus, the division

$$\frac{1}{\sqrt{2} \cdot \sigma}$$

is performed only once for a reasonable length of time and this result is buffered and fed to the input multiplier. Hence, only one multiplication of the input samples $y_k$ is necessary. In contrast, where this normalisation is performed inside the "Square Modulus Calculation" block in known architectures, sixteen multiplications of the following kind would have been necessary in the example of 16-QAM constellations:

$$\Gamma_p = \left(\frac{1}{2 \cdot \sigma^2}\right) \cdot \left|y_k - H_k \cdot s\left(d_k^0,\ldots,d_k^3\right)\right|^2 .$$

This still assumes that the factor

$$\left(\frac{1}{2\cdot\sigma^2}\right)$$

has been calculated once for a relatively long time, based on the assumption that the channel noise variance does not change rapidly.

Thus, and notably, the new square calculation function 416 also does not include a patch matrix operation, which is now treated separately in patch matrix function 420. In this manner, the 'Euclidean distance calculation' performed in new square calculation function 416 now only depends on the constellation type. Hence, the square calculation function 416 may be readily and easily replaced when a new constellation type is used.

This architecture enables the de-mapping function to be controlled and performed by the separate Patch Matrix function 420. Advantageously, the 'mapping' type, which defines the bit combination associated with each constellation point as shown in FIG. 3, now only impacts one single block: the Patch Matrix function 420. Thus, a different mapping configuration can be provided for by a simple change of the Patch Matrix function 420, with the remaining de-mapping architecture in FIG. 4 effectively unaffected. It is noteworthy that the Patch Matrix function 420 is only composed of wires that are interconnected with respect to the chosen labelling map, e.g. a set-partitioning mapping or Gray mapping, see for example John G. Proakis, "Digital Communications", McGraw-Hill editions, 3rd edition, 1995. Hence, a receiver designer may implement several parallel patch matrix units, to apply different labelling maps at minimal cost.

In summary, the 'mapping type' and the 'constellation type' define different aspects of the communication signal. The constellation type defines the number of constellation points together with their location in the complex plane. The mapping type, as presented above, defines which input bit stream is associated with which point of the constellation. Notably in the context of the present invention, these two aspects are now treated as distinct functions.

Finally, in the context of the present invention, the emphasis is focused on the so-called extrinsic probabilities

$$\gamma_{dem}\left(d_k^l \middle| y_k\right)$$

at the de-mapper output. The definitions of such extrinsic probabilities are also described by Muquet as follows:

$$\gamma_{dem}\left(d_k^{01} \middle| y_k\right) = K_1 \cdot \frac{P_{dem}\left(d_k^0 \middle| y_k\right)}{\gamma_{dec}\left(d_k^0\right)} = K_1 \cdot \sum_{d_k^1, d_k^2, d_k^3 \in (0,1)} P\left(y \middle| s\left(d_k^0, \ldots, d_k^3\right)\right) \cdot \gamma_{dec}\left(d_k^1\right) \cdot \gamma_{dec}\left(d_k^2\right) \cdot \gamma_{dec}\left(d_k^3\right), \qquad [5]$$

Where:

$\gamma_{dec}(d_k^l)$, $l$=0,1,2,3 are the a-priori-probabilities, which are either set to

$$\gamma_{dec}\left(d_k^l\right) = \frac{1}{2}, l = 0,1,2,3$$

(when no a-priori information is available), or to the corresponding value, which may for example be the result of a previous decoding step based on a soft-output decoder;

$K_1$ is a normalization factor, selected such that

$$\gamma_{dem}\left(d_k^l = 0\right) + \gamma_{dem}\left(d_k^l = 1\right) = 1. ;$$

and

$S(d_k^0,\ldots,d_k^3)$ is the corresponding complex constellation amplitude, as illustrated in FIG. 4.

With respect to a hardware implementation, the upper representation of

$$\gamma_{dem}\left(d_k^l \middle| y_k\right)$$

is not practical for a number of decoding algorithms, as illustrated by Muquet. This is as a result of the hardware implementation usually requiring a very large precision range and therefore a substantial number of bits. In this context, each computation of

$$\gamma_{dem}\left(d_k^l \middle| y_k\right)$$

requires twenty-four multiplication, eight addition and eight exponential calculations. Therefore, instead of the extrinsic probabilities, a so-called logarithmic expression is selected:

$$\Gamma_{dem}\left(d_k^l \middle| y_k\right) = \ln\left(\gamma_{dem}\left(d_k^l \middle| y_k\right)\right) \qquad [6]$$

where

$$\ln(e) = 1$$

is preferred. In consequence, the a-priori-probabilities

$$\gamma_{dec}\left(d_k^l\right), l = 0,1,2,3$$

become, in logarithmic representation,

$$\Gamma_{dec}\left(d_k^l\right) = \ln\left(\gamma_{dec}\left(d_k^l\right)\right).$$

In the case of white Gaussian noise the expression:

$$P\left(y \middle| s\left(d_k^0,\ldots,d_k^3\right)\right) = c_0 \cdot e^{-\frac{1}{2\cdot\sigma^2}\left|y_k - H_k s\left(d_k^0,\ldots,d_k^3\right)\right|^2} \qquad [7]$$

With:

$$c_0 = \frac{1}{\sqrt{2\cdot\pi}\sigma}$$

being constant, and

$\sigma^2$ being the noise variance.

Let us therefore define:

$$\Gamma_p = \ln\left(P\left(y \middle| s\left(d_k^0,...,d_k^3\right)\right)\right) = \ln(c_0) - \frac{1}{2\cdot\sigma^2}\cdot\left|y_k - H_k\cdot s\left(d_k^0,...,d_k^3\right)\right|^2 = \ln(c_0) - \left|\frac{y_k}{\sqrt{2}\cdot\sigma} - \frac{H_k}{\sqrt{2}\cdot\sigma}\cdot s\left(d_k^0,...,d_k^3\right)\right|^2 \quad [8]$$

Where: the contribution

$$\ln(c_0)$$

usually does not need to be computed as illustrated by, for example, Boutillon in the reference given above. Thus, in the following derivations,

$$\ln(c_0)$$

is omitted.

The resulting expression for

$$\Gamma_{dem}\left(d_k^0 \middle| y_k\right)$$

is:

$$\begin{aligned}\Gamma_{dem}\left(d_k^0 \middle| y_k\right) &= \ln\left(K_1\cdot\sum_{d_k^1,d_k^2,d_k^3\in(0,1)} P\left(y\middle|s\left(d_k^0,...,d_k^3\right)\right)\cdot\gamma_{dec}\left(d_k^1\right)\cdot\gamma_{dec}\left(d_k^2\right)\cdot\gamma_{dec}\left(d_k^3\right)\right)\\ &= \ln(K_1) + \ln\left(\sum_{d_k^1,d_k^2,d_k^3\in(0,1)} e^{\Gamma_p\left(y\middle|s\left(d_k^0,...,d_k^3\right)\right)+\Gamma_{dec}\left(d_k^1\right)+\Gamma_{dec}\left(d_k^2\right)+\Gamma_{dec}\left(d_k^3\right)}\right) \quad [9]\\ &= \ln(K_1) + \underset{d_k^1,d_k^2,d_k^3\in(0,1)}{Sum^*}\left(\Gamma_p\left(y\middle|s\left(d_k^0,...,d_k^3\right)\right)+\Gamma_{dec}\left(d_k^1\right)+\Gamma_{dec}\left(d_k^2\right)+\Gamma_{dec}\left(d_k^3\right)\right)\end{aligned}$$

During a first decoding step, no a-priori knowledge of the bits to be decoded is known, so the probability of either a logical '0' or a logical '1' is 0.5. However, after the first decoding step, the obtained decoding results are used in order to inject a-priori probabilities 426 of the bits to be decoded in the second decoding iteration step. An 'A-Priori Calculation' Unit 428 delivers the a-priori probabilities 426 to a combining function, hereinafter termed the 'Summing Unit' 424. In a practical implementation, the A-Priori Calculation unit 428 effectively buffers the soft outputs of the first decoding step. In the context of the present invention, the Summing Unit 424 calculates the terms to be treated by a number of $Sum^*$ blocks, which are effectively calculations of a logarithm of sum of (two or more) exponentials. In the context of the present invention, this calculation is termed the Sum-star (or Sum*) operator 432.

Referring now to FIG. 5, the particular operation of the $Sum^*$ operator is further described. Here:

$$Sum^*(x,y) = \ln\left(e^x + e^y\right)$$

and can be expressed as:

$$Sum^*(x,y) = \ln(e^x + e^y) = \max(x,y) + \ln(1 + e^{-|x-y|}) \quad [11]$$

This expression of the Sum-star as the max(x,y), plus a correction term, is widely termed the "max-star (or Max*) Operation" 540. The classical approach to implementing a logarithm of the sum of exponentials is to use the so-called 'Max-Star' (Max*) approach. The Max-star approach 500 is illustrated in FIG. 5, and is further described in the paper titled 'VLSI Architectures for the MAP Algorithm', to be published in IEEE Transactions on Communications and authored by E. Boutillon et al.

In this regard, as illustrated in FIG. 5, the Max* Operation 540 results from a summation 530 of the functions max (x,y) 510, giving:

The maximum value of x,y as:

Max (x,y)= x if x>=y; and
y, otherwise;

and the term:

$$\ln(1 + e^{-|x-y|}) \quad 520,$$

Where |.| indicates the calculation of the absolute value and '1n' is the natural logarithm.

Within the Max* operation, the term 1n(1+$e^{-|x-y|}$) is termed the "correction term". The correction term has the following characteristics:

(i)

$$\ln(1 + e^{-|x-y|}) \to 0 \; for \; |x-y| \to \infty \,. \quad [12]$$

In fact, the approximation

$$\ln(1 + e^{-|x-y|}) \to 0$$

is already valid for medium sized |*x*-*y*|.

(ii) The function

$$\ln(1 + e^{-|x-y|})$$

520 is difficult to approximate analytically (i.e. by several simple functions, etc.) in a simple manner. Therefore, notably, its values are invariably written into a look-up table.

In a hardware receiver implementation, the use of look-up tables is to be avoided if possible. Look-up tables require substantial amounts of memory, and therefore increase cost and footprint space. Furthermore, increasing the memory requirements in a circuit such as a communication receiver requires, in turn, additional testing.

Furthermore, as indicated above, the 'correction term'

$$\ln(1 + e^{-|x-y|})$$

has not previously been easily approximated by a simple function that is implementable in hardware. This has been problematic in some implementations where a hardware-based approach is favoured (for whatever reason).

In summary, this enhanced aspect of the present invention proposes a Hyperbolic-Cosine approach to calculate a logarithm of the sum of exponentials. In particular, the inventive concepts described herein introduce a very efficient mechanism to compute the *'non-trivial'* expression

$$Sum^*(x,y) = \ln\left(e^x + e^y\right)$$

in a very simple manner.

Advantageously, a Hyperbolic-Cosine approach has been developed so that it can be implemented as a simple topology with minimal performance cost. Thus, the hyperbolic-cosine approach of the preferred embodiment of the present invention is particularly useful in a hardware or firmware communication receiver design. This advantage is achieved as the logarithm of the sum of exponentials is approximated by simple functions and can thus be directly implemented without requiring additional memory elements/look-up tables, etc.

In accordance with this enhanced embodiment of the present invention, a new approach for the implementation of the *Sum** Operator (i.e. calculating a logarithm of a sum of exponentials) is proposed. The inventors propose that the

$$Sum^*(x,y) = \ln\left(e^x + e^y\right)$$

is expressed, without any approximation, as:

$$Sum^*(x,y) = \ln\left(e^x + e^y\right) = \ln\left(e^{\frac{x+y}{2}}\right) + \ln\left(e^{\frac{x-y}{2}} + e^{-\frac{(x-y)}{2}}\right) = \frac{x+y}{2} + \ln\left(2\cdot\cosh\left(\frac{x-y}{2}\right)\right). \qquad [13]$$

Notably, in this context, the expression:

$$\ln\left(2\cdot\cosh\left(\frac{x-y}{2}\right)\right) \qquad [14]$$

may be defined as the 'correction term'. The hyperbolic cosine (cosh) function has the following characteristics:

(i)

$$\ln(2\cdot\cosh(x)) = \ln(2) + \ln(\cosh(x))$$

is symmetric: as cosh(*x*) = cosh(- *x*). ; and

(ii) The derivation

$$\frac{\partial}{\partial x}\ln(2\cdot\cosh(x)) = \tanh(x) \rightarrow 1 \; for \; x \rightarrow \infty \; .$$

Thus, the expression in [15] below tends towards a very simple asymptotic function:

$$\ln(2\cdot\cosh(x)) = \ln(2) + \ln(\cosh(x)) \qquad [15]$$

Indeed, equation [15] can be approximately replaced by its asymptotic function for a sufficiently large x, usually when $x > 3$.

Referring now to FIG. 6, a topology for implementing a logarithm of a sum of exponentials calculation is illustrated in accordance with a preferred embodiment of the present invention. As indicated in FIG. 6, the function [15] can be expressed without any approximation by two functions 610, 620:

(i) (x+y)/2; usually implemented without any approximation in hardware, and
(ii)

$$\ln\left(2 \cdot \cosh\left(\frac{x-y}{2}\right)\right).$$

This term is usually implemented as an approximation (for example an approximation of the correction term 620).

These two functions 610, 620 are combined in summation function 630 to produce a Sum-star Operation 640. This is especially advantageous over known solutions, as the $\text{Sum}^*$ operations are NOT performed by look-up tables, but by an approximation of the real function.

The outputs of the de-mapping architecture implementation of FIG. 4 contain the true log-likelihood plus an additive constant term `-1n($K_1$)'. Often, it is not necessary to know this value. A skilled artisan would appreciate that there are a number of known mechanisms described in the literature to estimate this value, and as such those mechanisms will not be described here.

Referring now to FIG. 7, a graph 700 illustrates the approximation of equation [14] by two simple linear functions. This approximation is not perfect, but performs reasonably well. It is noteworthy that near-perfect approximations are obtained for a $2^{nd}$ or $3^{rd}$ order approximation. FIG. 9 demonstrates that the approximation of equation [14] by two linear functions is leading to acceptable results.

It is within the contemplation of the present invention that many other approximations of the correction term [14] can be used. In a similar vein, it is within the contemplation of the present invention that many other implementation functions may be used, for example, higher order approximations or using more than two linear functions, etc. One example of a mathematical implementation is:

$$\ln\left(2 \cdot \cosh\left(\frac{x-y}{2}\right)\right) \approx \begin{cases} 0.7 & \text{if} \quad \left|\frac{x-y}{2}\right| < 0.7 \\ \left|\frac{x-y}{2}\right| & \text{if} \quad \left|\frac{x-y}{2}\right| \geq 0.7 \end{cases}. \qquad [16]$$

Another possible example would be:

$$\ln\left(\cosh\left(\frac{x-y}{2}\right)\right).$$

In equation [16], it is noted that, dependent upon the implementation used, the value '0.7' may be replaced by other more suitable values. Therefore, the value '0.7' should be viewed as only a preferred value, in the preferred mathematical implementation example.

The preferred hyperbolic cosine function offers particular benefits in a hardware receiver implementation, since it enables a very simple approximation of the function

$$Sum^*(x,y) = \ln\left(e^x + e^y\right).$$

This, in turn, leads to a new readily implementable correction term. This is in direct contrast to the classical approach

that is based upon a look-up table.

It is within the contemplation of the present invention that the Sum-star approach can be implemented either in software, firmware or hardware. Furthermore, the inventive concepts are applicable in many applications, including all algorithms that involve a Sum* operator, such as turbo-codes.

Referring now to FIG. 8, the general expression [11] is, for example, implemented by using a well-known tree-structure of operators [12]. As shown, the operation

$$Sum^*(x,y) = \ln\left(e^x + e^y\right)$$

is performed at each branch of the tree structure. Possible implementation solutions of this operation are presented above. Advantageously, in this manner, the preferred embodiment of the present invention can be applied to well known implementations in order to calculate a logarithm of a sum of two or more exponentials using this tree structure.

Referring now to FIG. 9, a graph 900 illustrates a simulated performance of a receiver employing a Sum* Operation according to the aforementioned inventive concepts. FIG. 9 presents the simulation results based on a 64-carrier frequency orthogonal frequency division multiplex (OFDM) modulation, with 16-QAM constellations and a Rayleigh fading channel. The bit-error-rate (BER) is shown over the signal-to-noise ratio (SNR), here defined as data symbol power over noise power. FIG. 9 clearly illustrates that even the very simple approximation of the hyperbolic cosine functions leads to very little performance loss when compared to a full-precision implementation. The hyperbolic cosine approximation, in this case, is implemented by simply employing two linear functions, as illustrated in FIG. 6.

Thus, it is within the contemplation of the invention that any applications where the calculation:

$$Sum^*(x,y) = \ln\left(e^x + e^y\right).$$ , or more generally, [11]

is required, such as turbo-decoders, BCJR decoders, turbo-demodulation, etc. may benefit from the proposed Sum* implementation described herein. More generally, the implementation can be applied to any number of estimation algorithms and/or probabilistic calculations, where expressions such as [11] and [12] occur.

Although the enhanced embodiment of the present invention has been described with reference to calculating a logarithm of a sum of exponentials in a receiver of a digital communication unit, it is envisaged that any apparatus that includes a processor for performing one or more probabilistic calculations may benefit from the inventive concepts hereinbefore described. As one of many examples, it is envisaged that a speech recognition unit may use the aforementioned concepts to calculate a logarithm of a sum of exponentials in the processing of a speech signal that is to be recognised.

However, it is within the contemplation of the invention that the inventive concepts herein described are applicable to any decoder, i.e. it is applicable for any rate and any puncturing scheme. In particular, the decoding scheme of the present invention can be applied to any encoded data that can be decoded by a soft output decoder, i.e. any convolutional or turbo encoder.

It will be understood that a receiver architecture, particularly that of a de-mapper block and a method of receiving (de-mapping) a communication signal as described above, tends to provide at least one or more of the following advantages:

(i) Enables a realisable hardware implementation of a de-mapper;

(ii) The proposed de-mapper architecture offers very low complexity; and

(iii) The proposed de-mapper architecture offers easy reconfiguring of an iterative decoding-based approach, thereby enabling a receiver designer/receiving communication unit to adapt a receiver operation to different mappings and/or constellation types.

It will also be understood that an apparatus, for example a communication unit, and a method of calculating a logarithm of a sum of exponentials, as described above, tend to provide at least one or more of the following advantages:

(i) The proposed implementation of the Sum* Operator with the hyperbolic cosine approach can be used in many different architectures and applications, including those found in communication receivers. Indeed, the inventive concepts hereinbefore described may be applied wherever a Sum-star Operation is needed. Examples of applications include different iterative procedures such as: turbo-decoding, BCJR decoding, turbo-demodulation, etc.

(ii) The proposed implementation of the Sum* Operator with the hyperbolic cosine approach does not need additional memory for a look-up table. Thus, it provides particular advantage in a hardware implementation, where memory requires additional cost, space and peripheral devices, for example to perform testing, etc. Advantageously, the proposed implementation of the Sum* Operator with the hyperbolic cosine approach is equally applicable to a software-based design.

Whilst specific, and preferred, implementations of the present invention are described above, it is clear that one skilled in the art could readily apply further variations and modifications of such inventive concepts.

Thus a receiver architecture, and particularly an architecture to implement a de-mapper function, together with a method of receiving (de-mapping) a communication signal has been provided wherein at least some of the aforementioned disadvantages with prior art arrangements have been alleviated.

## Claims

**1.** A digital communication unit (200) comprising a digital receiver (210) for receiving a digital signal, the digital receiver comprising:

a digital demodulator for converting the received digital signal into digitized demodulated data,
a de-mapping function (400), operably coupled to the digital demodulator for receiving and de-mapping demodulated data to provide channel decoding data to an iterative or soft input decoder,

the digital communication unit (200) **characterized by**:

a normalization function (412), operably coupled to or functioning as part of the de-mapping function (400), to normalize the received demodulated data such that a de-map operation of the normalized demodulated data generates a soft input bit sequence (414), and
a combining function (424) to receive extrinsic data (426) and combine the received extrinsic data (426, 428) with a soft input bit sequence (414) to generate a de-mapped signal (434).

**2.** The digital communication unit (200) according to Claim 1, wherein the digital communication unit (200) is further **characterized by** a distance calculation function (416), operably coupled to the normalization function (412), to receive and calculate one or more Euclidean distances for the received normalized demodulated data.

**3.** The digital communication unit (200) according to Claim 2, wherein the digital communication unit (200) is further **characterized by** a patch matrix function (420) to bundle said distance calculations for inputting to said combining function (424).

**4.** The digital communication unit (200) according to any preceding Claim, wherein the combining function (424) is a summer to combine signals in a log-likelihood format.

**5.** The digital communication unit (200) according to any preceding Claim, wherein the normalization function (412) performs a noise normalization process on the received demodulated data or a channel normalization process on the received demodulated data.

**6.** The digital communication unit (200) according to any preceding Claim, the digital communication unit (200) further **characterized by** a processor (432), operably coupled to the combining function (424), for performing one or more probabilistic calculations of a logarithm of a sum of exponentials (340) using a hyperbolic cosine function (320).

**7.** The digital communication unit (200) according to Claim 6, wherein said hyperbolic cosine function (320) is used within a correction term, for example of a form:

$$\ln(2.\cosh(x))..$$

**8.** The digital communication unit (200) according to Claim 7, wherein said correction term is implemented using an analytical approach.

**9.** The digital communication unit (200) according to Claim 7 or Claim 8, wherein said correction term (320) is a logarithm of a constant multiplied by a Cosh function, for example:

$$\ln\left(2\cdot\cosh\left(\frac{x-y}{2}\right)\right). \quad \text{or} \quad \ln\left(\cosh\left(\frac{x-y}{2}\right)\right).$$

**10.** The digital communication unit (200) according to any of preceding Claims 6 to 9, wherein said hyperbolic cosine function (320) is approximated and/or implemented using, for example, one or more of the following: higher order approximations, two or more linear functions, or a function substantially as indicated below:

$$\ln\left(2\cdot\cosh\left(\frac{x-y}{2}\right)\right)\approx\begin{cases}0.7 & if \quad \left|\frac{x-y}{2}\right|<0.7\\ \left|\frac{x-y}{2}\right| & f \quad \left|\frac{x-y}{2}\right|\geq 0.7\end{cases}.$$

**11.** The digital communication unit (200) according to any of preceding Claims 6 to 10, wherein said logarithm of a sum of exponentials (340) is substantially of the form:

$$Sum^{*}(x,y)=\ln\left(e^{x}+e^{y}\right)=\frac{x+y}{2}+\ln\left(2\cdot\cosh\left(\frac{x-y}{2}\right)\right).$$

**12.** The digital communication unit (200) according to any of preceding Claims 6 to 11, wherein said logarithm of a sum of exponentials (340) is implemented as a tree structure.

**13.** The digital communication unit (200) according to any preceding Claim, wherein said de-mapping function (400) is implemented as a hardware iterative de-mapper.

**14.** A method of receiving a communication signal in a digital receiver (210), the method comprising the steps of:

receiving a digital signal;
converting the received digital signal into digitized demodulated data; and
de-mapping demodulated data to provide channel-decoding data to an iterative or soft input decoder;

the method **characterized by** the steps of:

normalizing the received demodulated data such that a de-map operation of the normalized demodulated data generates a soft input bit sequence (414); and
combining received extrinsic data (426, 428) with said soft input bit sequence (414) to generate a de-mapped signal (434).

**15.** The method of receiving a communication signal in a digital receiver (210) according to Claim 14, wherein the method is further **characterized by** the digital receiver performing the distinct steps of:

calculating one or more Euclidean distances for the received normalized demodulated data; and
bundling said distance calculations by a patch matrix function (420).

**16.** The method of receiving a communication signal in a digital receiver (210) according to Claim 14 or Claim 15, wherein the method is further **characterized by** the step of:

calculating a logarithm of a sum of exponentials (340) using a hyperbolic cosine function (320).

**17.** The method of receiving a communication signal in a digital receiver (210) according to Claim 16, wherein said step of using a hyperbolic cosine function (320) comprises using it as a correction term, for example of a form:

$$\ln(2.\cosh(x)).$$

**18.** The method of receiving a communication signal in a digital receiver (210) according to Claim 16 or Claim 17, wherein said step of using a hyperbolic cosine function (320) as a correction term comprises calculating a logarithm of a constant multiplied by a Cosh function, for example:

$$\ln\left(2 \cdot \cosh\left(\frac{x-y}{2}\right)\right). \quad \text{or} \quad \ln\left(\cosh\left(\frac{x-y}{2}\right)\right).$$

FIG. 1
Prior Art

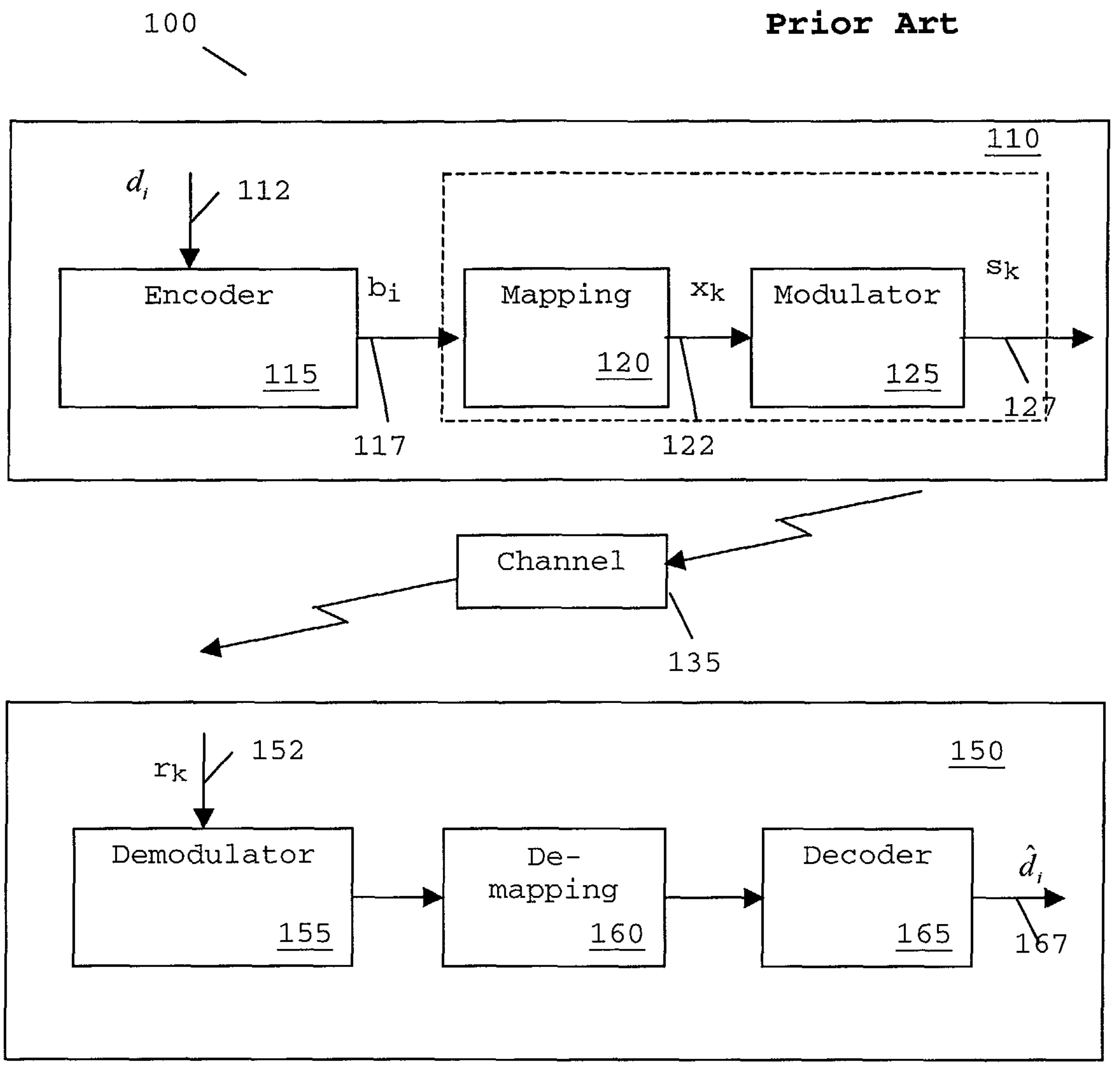

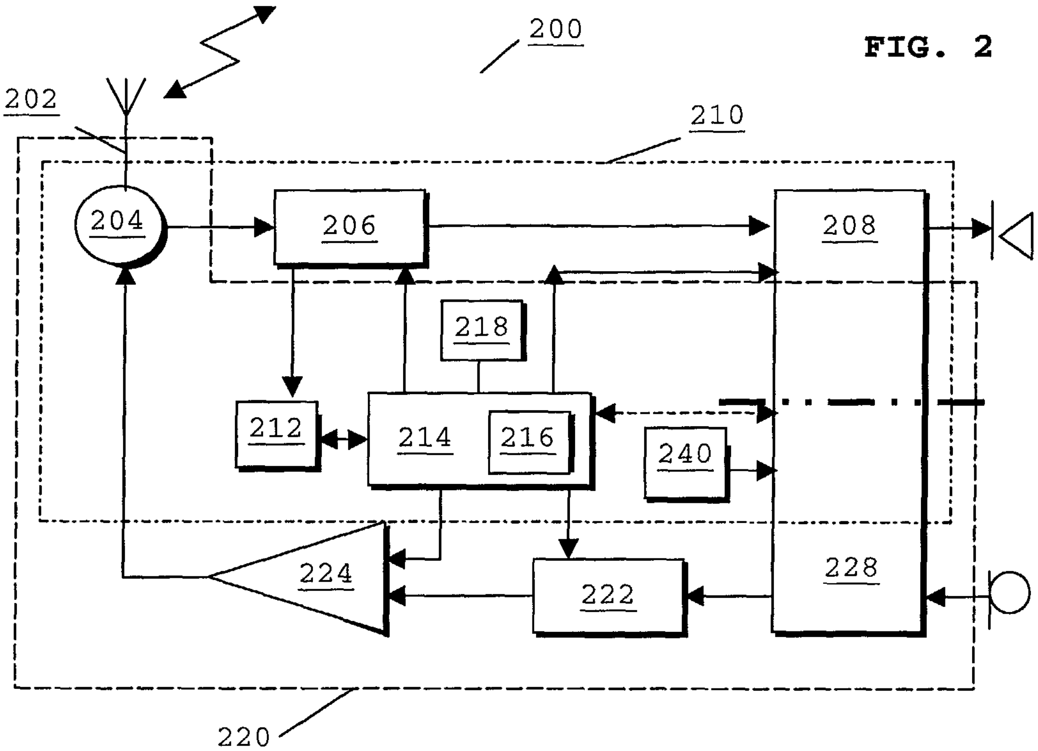
200
202
210
204
206
208
218
212
214
216
240
224
222
228
220

FIG. 2

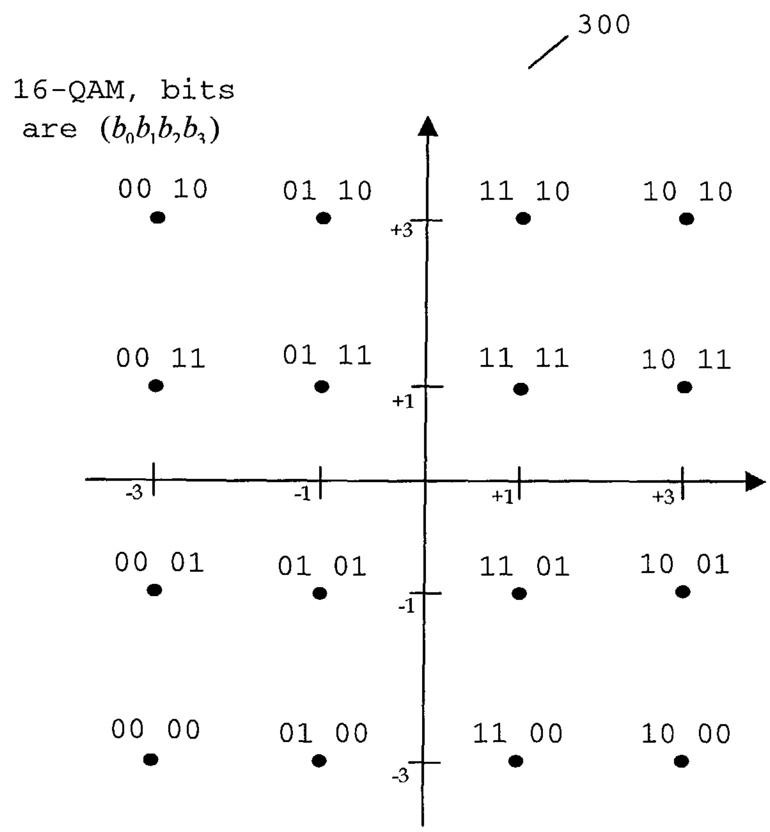
300
16-QAM, bits are $(b_0 b_1 b_2 b_3)$
00 10
01 10
11 10
10 10
00 11
01 11
11 11
10 11
00 01
01 01
11 01
10 01
00 00
01 00
11 00
10 00
+3
+1
-1
-3
-3
-1
+1
+3

FIG. 3

FIG. 4

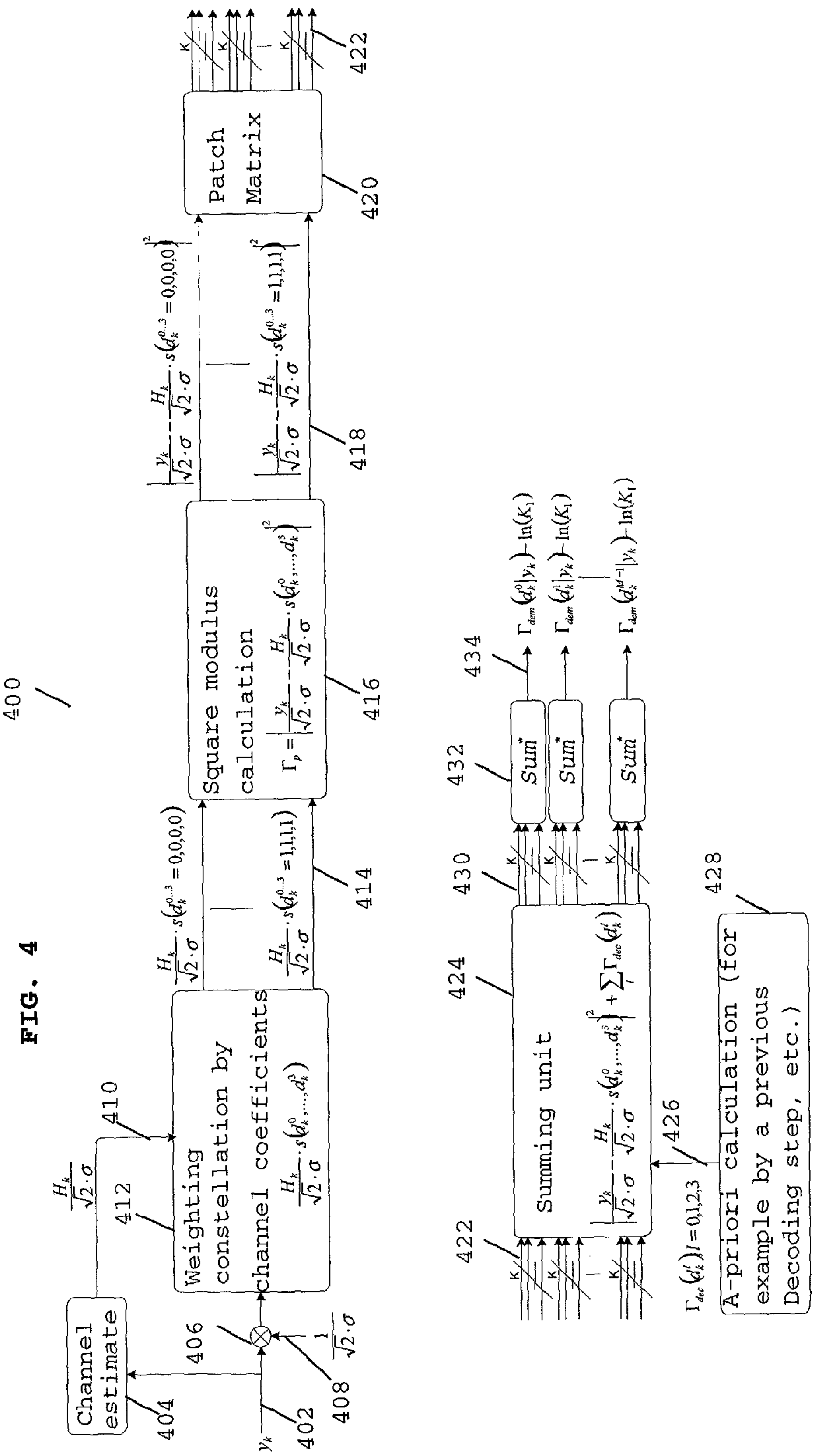
400
Channel estimate
404
402
406
408
410
412
Weighting constellation by channel coefficients
414
Square modulus calculation
416
418
Patch Matrix
420
422
Summing unit
424
426
A-priori calculation (for example by a previous Decoding step, etc.)
428
430
Sum*
432
434

FIG. 5 - Prior art

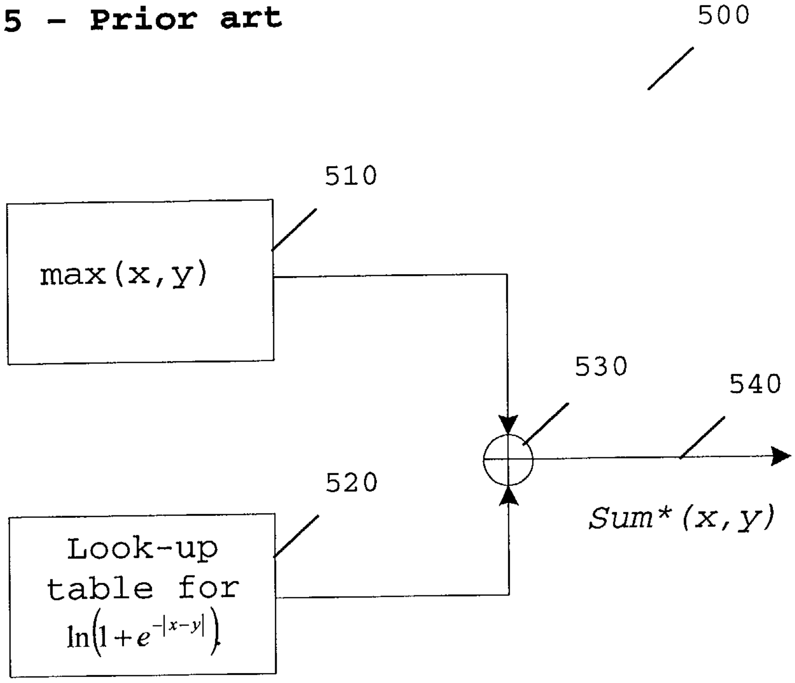


FIG. 6

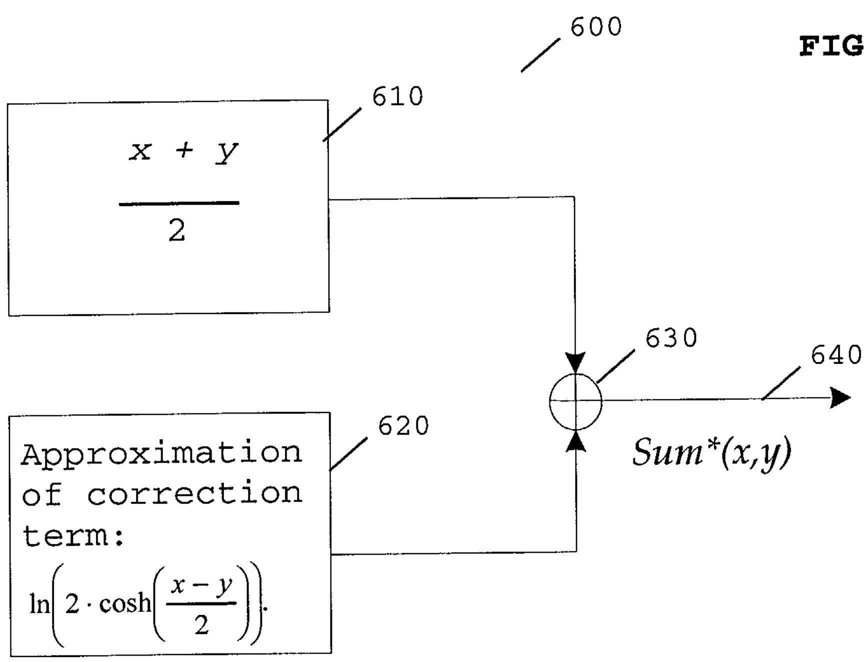

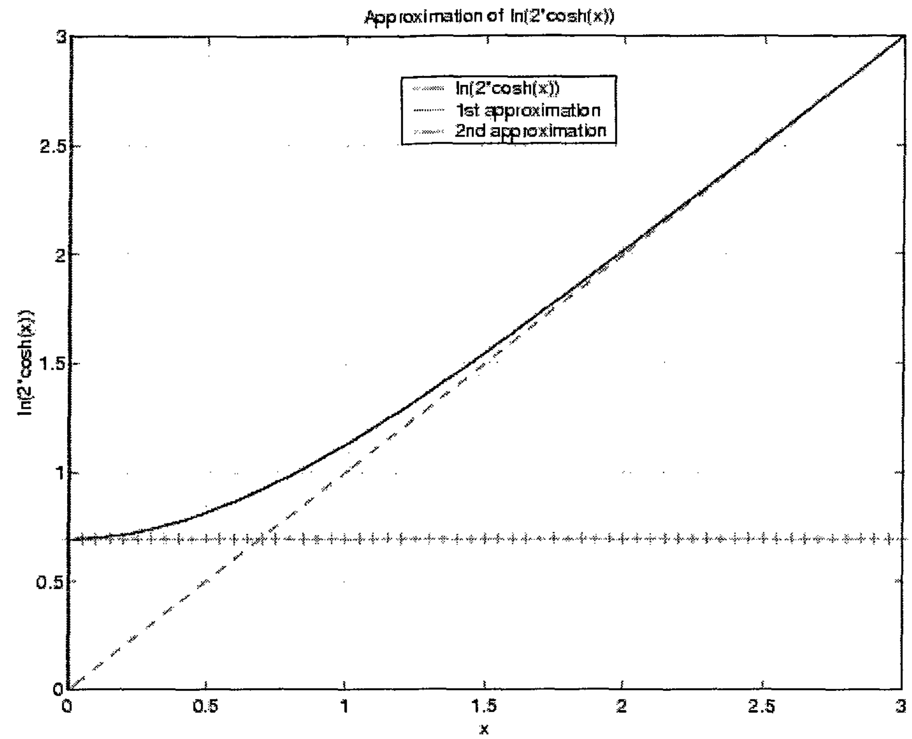
Approximation of ln(2*cosh(x))
ln(2*cosh(x))
1st approximation
2nd approximation
ln(2*cosh(x))
x
0
0.5
1
1.5
2
2.5
3

FIG. 7

FIG. 8

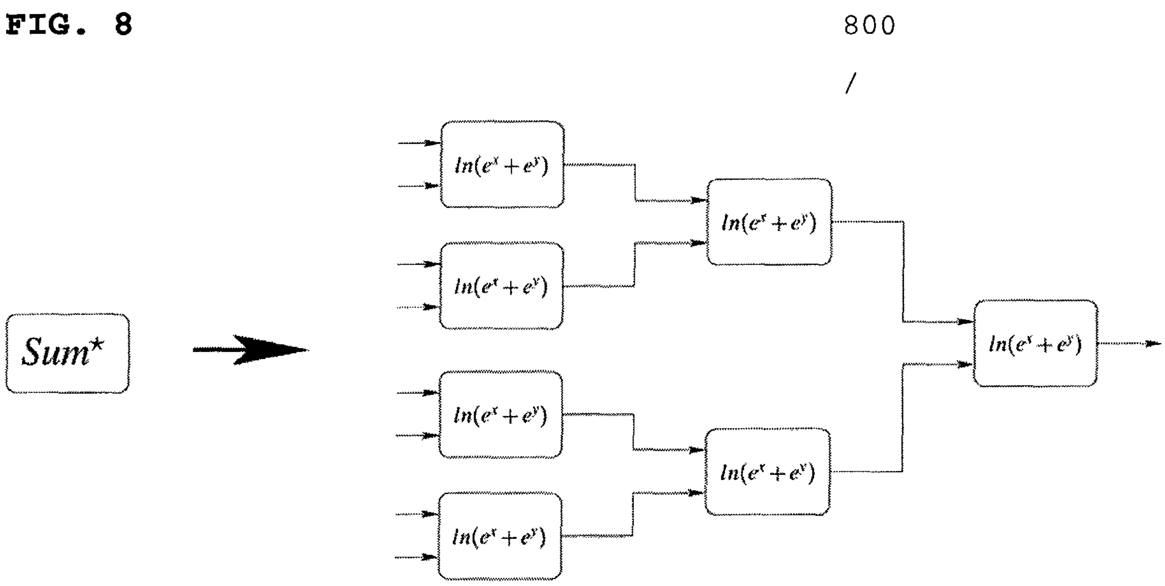
800
Sum*
$ln(e^x+e^y)$

FIG. 9

900

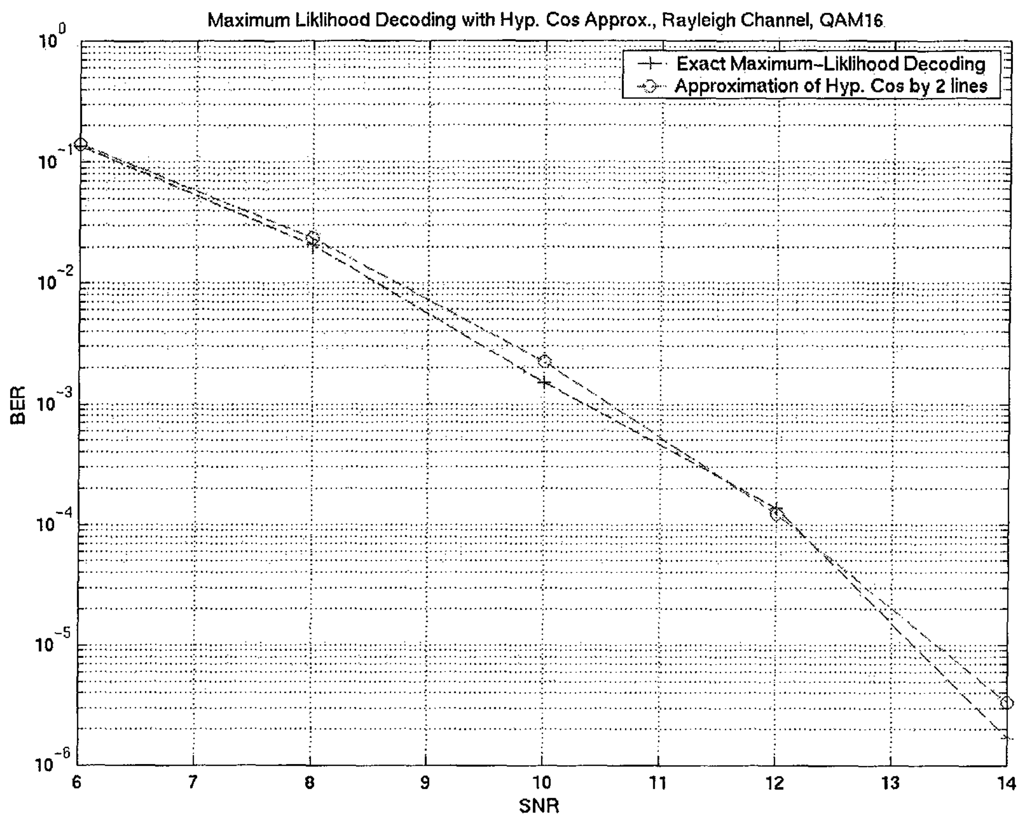
Maximum Liklihood Decoding with Hyp. Cos Approx., Rayleigh Channel, QAM16
Exact Maximum-Liklihood Decoding
Approximation of Hyp. Cos by 2 lines
BER
SNR
$10^0$
$10^{-1}$
$10^{-2}$
$10^{-3}$
$10^{-4}$
$10^{-5}$
$10^{-6}$
6
7
8
9
10
11
12
13
14

European Patent Office

# EUROPEAN SEARCH REPORT

Application Number
EP 03 29 0126

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | TONELLO A M: "Space-time bit-interleaved coded modulation with an iterative decoding strategy" 6874065 VEHICULAR TECHNOLOGY CONFERENCE , vol. 1, 24 September 2000 (2000-09-24), pages 473-478, XP010525208 * the whole document * ----- | 1-18 | H04L27/38 |
| | | | TECHNICAL FIELDS SEARCHED (Int.Cl.7) |
| | | | H04L |

The present search report has been drawn up for all claims

| Place of search | Date of completion of the search | Examiner |
|---|---|---|
| THE HAGUE | 21 May 2003 | Reilly, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)